# EUROPÄISCHE PATENTSCHRIFT

(11) **EP 1 857 002 B1**
(45) Veröffentlichungstag und Bekanntmachung des Hinweises auf die Patenterteilung: **16.07.2008**
(21) Anmeldenummer: 07004851.7
(22) Anmeldetag: 09.03.2007
(51) Int. Cl.: A43B 7/12, A43B 23/08, B29D 31/518

(54) **Schuh, insbesondere Arbeitsschutzschuh**
Shoe, in particular industrial safety shoe
Chaussure, en particulier chaussure de protection

(30) Priorität: 17.05.2006 DE 202006007887 U
(43) Veröffentlichungstag der Anmeldung: 21.11.2007
(73) Patentinhaber: Uvex Arbeitsschutz GmbH, 90766 Fürth (DE)
(72) Erfinder: Rössler, Dieter, 47533 Kleve (DE)
(74) Vertreter: Schneck, Herbert

(56) Entgegenhaltungen:
- EP-A1- 0 714 612
- WO-A-97/24940
- DE-A1- 2 040 127
- DE-A1- 19 959 301

## Beschreibung

Die Erfindung richtet sich auf einen Arbeitsschutzschuh mit einer mit Kunststoff umspritzten Zehenschutzkappe, einer Sohle und einem Oberlederblatt. Ein solcher Schuh ist aus EP-A-0 714 612 bekannt.

Bei bekannten derartigen Schuhen wird herkömmlicherweise das Zwischenfutter gestanzt und an der Spitze zusammengezackt und mit einer Zackennaht wird ein Netzband angezackt. Anschließend wird das Netzband an das Oberlederblatt angezackt. Zum Sohlenrand werden Zwischenfutter und Oberleder an das Netzband angezackt und dieses mit dem Futter vernäht.

Bei einem Arbeitsschutzschuh mit einer Zehenschutzkappe, insbesondere mit einer Kunststoff-Zehenschutzkappe aus Polyurethan, ergibt sich bei dieser Herstellungstechnik der Nachteil, dass die herkömmliche, ca. 4 mm breite Zackennaht beim Aufrauhen des Oberleders bei der Besohlung beschädigt werden kann, wodurch eine zu geringe Sohlenrandhaftung bedingt sein kann.

Hiervon ausgehend liegt der Erfindung die Aufgabe zugrunde, einen Arbeitsschutzschuh mit einer Zehenschutzkappe, derart weiterzubilden, dass der Herstellungsaufwand reduziert und die Haltbarkeit erhöht wird.

Diese Aufgabe wird erfindungsgemäß dadurch gelöst, ein gestanzter Netz-Zuschnitt an der Spitze mittels einer Zackennaht, die senkrecht zur Sohle über den Spitzenbereich verläuft, zusammengezackt ist, dass das Netz mit Untertritt mittels einer Steppnaht mit dem an der Verbindungskante aufgerautem Oberlederblatt vernäht ist, das Netz und Oberlederblatt mittels einer Zackennaht mit dem Netzband verbunden sind und das Netzband mit dem Membranfutter vernäht ist.

Durch die erfindungsgemäße Ausgestaltung wird ein kostenaufwändiges Netzband am Oberlederblatt eingespart ebenso wie der Arbeitsgang des Anzackens des Netzbandes an das Zwischenfutter. Unter "Anzacken" versteht man dabei das Verbinden des Netzbandes mit dem Zwischenfutter mittels einer Zackennaht.

Die Haltbarkeit eines so ausgestalteten Schuhs wird dadurch erhöht, dass die Sicherheit beim Aufrauhen der Oberleder zum Sohlenrand der Kunststoff-Zehenkappe erhöht wird, da die Steppnaht nur 2 mm von der Oberlederkante entfernt liegt und dadurch beim Sohlenrand-Rauhen nicht so leicht beschädigt werden kann, wohingegen eine herkömmliche Zackennaht ca. 4 mm in die Oberlederkante hineinreicht. Es wird also im Vergleich zu bekannten Konstruktionen eine bessere Oberlederhaftung an der Kunststoff-Überkappe erreicht und die Gefahr einer Beschädigung bei der Besohlung reduziert.

In weiterer Ausgestaltung der Erfindung ist vorgesehen dass, die Hinterkante der Zehenschutzkappe mit Abstand zur Vorderkante des Oberlederblatt verläuft und Kunststoff beim Umspritzen unter Ausbildung einer Kunststoffkappe in den Zwischenraum fließt und sich mit dem Membran-futter verbindet. Hierdurch wird erreicht, dass der Schuh absolut wasserdicht wird.

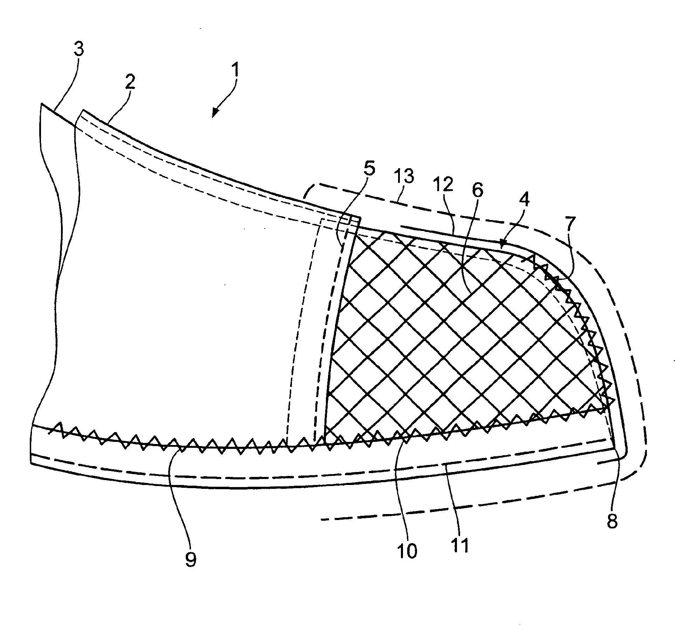

Nachfolgend wird die Erfindung anhand eines bevorzugten Ausführungsbeispiels in Verbindung mit der Zeichnung näher erläutert. Diese zeigt eine schematische, teilweise aufgebrochene Seitenansicht des Vorderteils eines erfindungsgemäßen Arbeitsschutzschuhs.

Ein in der Zeichnung dargestellter Schuh 1 umfasst ein Oberleder 2 und unterhalb desselben ein atmungsaktives Futter 3, wie es beispielsweise unter der Bezeichnung "Goretex" oder "Sympatex" im Handel ist.

Im Bereich 4 der Zehenspitzen ist eine in der Zeichnung nicht sichtbare Zehenkappe aus Kunststoff vorgesehen.

Das Oberleder 2 ist im Übergangsbereich zum Zehenbereich 4 mittels einer Steppnaht 5 mit einem Netz 6 verbunden, wobei das Netz 6 eine Zackennaht 7 aufweist, die an der Schuhspitze vom Sohlenbereich 8 senkrecht nach oben verläuft. Der Bereich des Netzes 6 oberhalb der Zehenkappe wird als Blattspitzenbereich bezeichnet.

An der Unterseite ist das Oberleder 2 mittels einer Zackennaht 9 mit einem Netzband 10 verbunden, wobei unterhalb dieser Zackennaht 9 im Abstand zu dieser eine Steppnaht 11 verläuft, die Netzband 10 und das Membran-Futter 3 verbindet.

Bei der Besohlung wird über die Blattspitze des Netzes 6 eine Zehenschutzkappe geschoben. Zwischen der Kante des Oberleders 2 und der Hinterkante der Zehenschutzkappe 12 bleibt ein Zwischenraum, so dass beim Umgießen mit einer Polyurethan-Kappe 13 das Polyurethan in den Zwischenraum fließen kann und sich mit dem Membran-Futter 3 verbindet, so dass der Schuh wasserdicht wird.

## Patentansprüche

1. Arbeitsschutzschuh mit einer mit Kunststoff umspritzten Zehenschutzkappe, einer Sohle und einem Oberlederblatt **dadurch gekennzeichnet, dass** ein gestanzter Netz-Zuschnitt (6) an der Spitze mittels einer Zackennaht (7), die senkrecht zur Sohle über den Spitzenbereich verläuft, zusammengezackt ist, dass das Netz (6) mit Untertritt mittels einer Steppnaht (5) mit dem an der Verbindungskante aufgerautem Oberlederblatt (2) vernäht ist, das Netz (6) und Oberlederblatt (2) mittels einer Zackennaht (9) mit dem Netzband (10) verbunden sind und das Netzband (10) mit dem Membranfutter (3) vernäht ist.

2. Arbeitsschutzschuh nach Anspruch 1, **dadurch gekennzeichnet, dass** die Hinterkante der Zehenschutzkappe (12) mit Abstand zur Vorderkante des Oberlederblatt (2) verläuft und Kunststoff beim Umspritzen unter Ausbildung einer Kunststoffkappe (13) in den Zwischenraum fließt und sich mit dem Membranfutter (3) verbindet.

## Claims

1. Industrial safety shoe comprising a protective toe cap coated with a polymeric material, a sole and a vamp portion, **characterised in that** a punched mesh piece (6) at the tip is pinked together by means of a pinked seam (7) that extends over the tip area perpendicularly to the sole; that the mesh (6) is sewn to the vamp portion (2) by means of a quilting seam (5) so as to obtain an underlay, the vamp portion (2) being roughened at the connecting edge; the mesh (6) and the vamp portion (2) are joined to the mesh ribbon (10) by means of a pinked seam (9), and the mesh ribbon (10) is sewn to the membrane lining (3).

2. Industrial safety shoe according to claim 1, **characterised in that** the back edge of the protective toe cap (12) extends at a distance from the front edge of the vamp portion (2), with polymeric material flowing into the gap during the coating process so as to form a plastic cap (13) while bonding with the membrane lining (3).

## Revendications

1. Chaussure de sécurité au travail avec un embout de protection des orteils enrobé de matière synthétique moulée par injection, une semelle et une empeigne, **caractérisée en ce qu'**une pièce en filet (6) découpée à l'emporte-pièces est montée au sommet au moyen d'une couture zig-zag (7) s'étendant perpendiculairement à la semelle sur la zone de sommet, **en ce que** le filet (6) est au moyen d'une couture simple (5) cousu sur une prise de piquage à l'empeigne (2) rugosifiée sur le bord d'assemblage, le filet (6) et l'empeigne (2) sont montés sur la bande de filet (10) au moyen d'une couture zig-zag (9), et la bande de filet (10) est cousue à la membrane de doublure (3).

2. Chaussure de sécurité au travail selon la revendication 1, **caractérisée en ce que** le bord arrière de l'embout de protection des orteils (12) est espacé du bord avant de l'empeigne (2), et **en ce que** de la matière synthétique s'écoule dans l'interstice lors de l'enrobage par injection pour former un embout en matière synthétique (13), et se lie à la membrane de doublure (3).
